# EUROPEAN PATENT APPLICATION

(11) **EP 2 148 455 A1**
(43) Date of publication of application: **27.01.2010**
(21) Application number: 07845730.6
(22) Date of filing: 28.11.2007
(51) Int. Cl.: H04B 10/04

(54) **A DEVICE AND METHOD TO PRODUCE AN OPTICAL MODULATING SIGNAL OF RZ-DPSK**

(30) Priority: 12.04.2007 CN 200710091186
(71) Applicant: ZTE Corporation, Shenzhen, Guangdong 518057 (CN)
(72) Inventor: ZHANG, Likun, Guangdong 518057 (CN); XU, Changwu, Guangdong 518057 (CN); YI, Hong, Guangdong 518057 (CN)
(74) Representative: McCann, Heather Alison
(86) International application number: PCT/CN2007/003362
(87) International publication number: WO 2008/124982

(57) **Abstract**

The present invention discloses a RZ-DPSK modulated optical signal generation apparatus and method, wherein the apparatus comprises: a high speed multiplexer for amplifying a photo-electric converted high speed data signal and de-multiplexing it into parallel low speed signals, pre-coding the parallel low speed signals, then multiplexing the pre-coded low speed signals into a high speed data signal, inputting a processed data + and synchronous clock into a first RZ converter and amplifier, and inputting a pre-coded data - and synchronous clock into a second RZ converter and amplifier; a first RZ converter and amplifier and a second RZ converter and amplifier for converting data + and data - NRZ signals into RZ signals, then amplify them separately, and use the amplified RZ signal to drive a LiNbO₃ modulator; a LiNbO₃ modulator has differential inputs, when the CW laser emits optical power and transmits through the modulator, a RZ-DPSK modulated optical signal is obtained from the modulator output.

## Description

### Technical Field

The present invention relates to optical communication field, and especially, to a RZ-DPSK modulated optical signal generation apparatus and method.

### Background Art

With the continuous development of the optical fiber communication technology, the requirement for new type of optical modulation has been produced. Generally, the modulated optical signal produced by dense wavelength division multiplexed optical transmission system with super capacity, long distance and ultra-long span requires high optical signal noise ratio (OSNR) tolerance, high ability of resisting nonlinear effects, high chromatic dispersion tolerance, and etc., such new demands directly lead to generate many new type modulation technologies, such as a return to zero (RZ) modulated optical signal, a carrier suppression return to zero (CS-RZ) modulated optical signal, a minimum shift keying (MSK) modulated optical signal, a Duobinary modulated optical signal and a return to zero differential phase shift keying (RZ-DPSK) modulated optical signal and etc. The principles and methods of the generation of such new modulated optical signals have been early proposed and some of them have been realized in the optical transmission system. Through pre-coded and balanced receiver technique, RZ-DPSK modulation improves the sensitivity and optical signal noise ratio performance and has good nonlinear resisting ability, thus becoming mainly selected optical modulation technology for optical transmission system with large capacity, long distance and long span transmission system, so this technology has drawn much attention from the public in recent years.

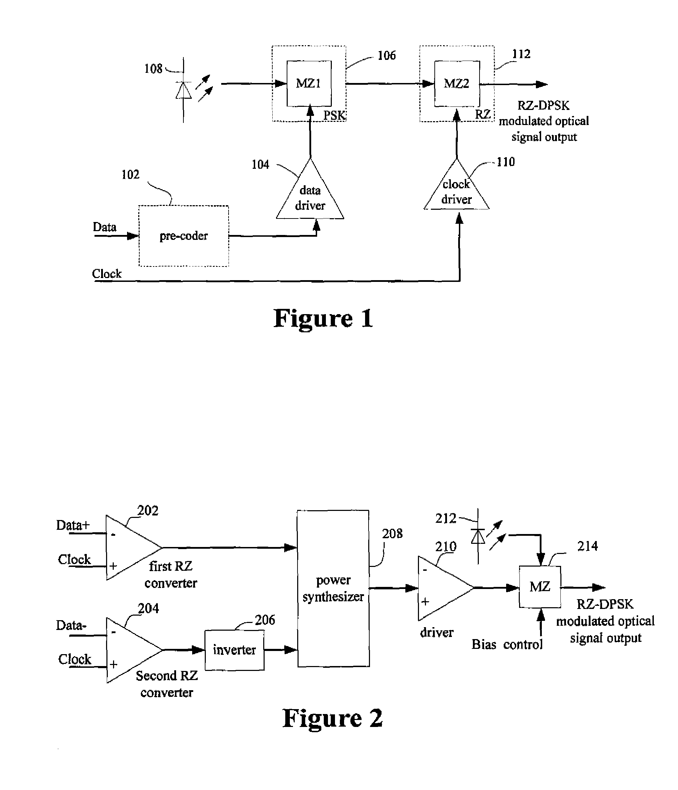

Conventional RZ-DPSK modulated optical signal generation apparatus generally needs to be realized by a two cascade optical modulation method. As shown in figure 1, firstly, a high speed data stream is pre-coded by a differential pre-coder 102; then the signal output by the differential pro-coder 102 is amplified by a data amplifier 104 to drive a LiNbO₃ modulator MZ1-data modulator 106, a data modulation signal with phase modulation information is obtained after a stable continuous wave laser source 108 transmitting through the LiNbO₃ modulator MZ1-data modulator 106, so as to ensure the code 0 and the code 1 in the high speed data stream have a phase difference of π. And then the NRZ code is converted into a RZ code by another LiNbO₃ modulator MZ2-clock modulator 112 drove by a clock amplifier 110. After two cascade modulation, the obtained RZ-DPSK modulated optical signal is output at last. Wherein, the input clock signal may be a full synchronous clock or a half synchronous clock, and the order of the two cascade modulation, namely data modulation and clock modulation, can be interchanged.

However, there are pluralities of technical problems caused by adopting this two cascade LiNbO₃ modulators to realize RZ-DPSK modulated optical signal: one is that the volume of the LiNbO₃ modulator is relative large and the cost is higher, the other is that it is difficult to couple optical fiber of the continuous wave laser and the polarization maintaining fiber of the LiNbO₃ modulator and the same for the two cascade LiNbO₃ modulators. Thus, the optical transmission system terminal that adopts such an apparatus is not so good. In addition, the data driver requires the output signal amplitude to be 2Vπ peak to peak voltage, which needs more power consumption, various power supplies in the optical transmission terminal.

Along with the realization of RZ signal in the electrical domain, an apparatus realizing the RZ-DPSK modulated optical signal by adopting one-stage optical modulation is proposed. As shown in figure 2, the differential output data + and data -, which have been pre-coded, with the synchronous clock respectively go through a first RZ converter 202 and a second RZ converter 204, which convert the NRZ signal into the RZ signal respectively; then, one signal going through a high speed inverter 206, together with the other converted RZ signal synthesized to be a three-level electric signal through a power synthesizer 208, and this three-level electric signal is amplified by a amplifier 210, then used to drive a LiNbO₃ modulator MZ 214, and a RZ-DPSK modulated optical signal is output from the LiNbO₃ modulator at last. Wherein, a continuous wave laser 212 has the same function as that of the continuous wave laser 108 in figure 1.

However, this apparatus has the following defects as well: firstly, the added high speed inverter and power synthesizer, especially the use of the power synthesizer, cause the attenuation of the transmitted high speed electric signal; secondly, the two-route RZ signals go through different paths before they entering the power synthesizer, and power synthesizing the three-level signal has strict requirement to the input phase of the two RZ signals, so it is necessary to add a phase shifter in the high speed signal transmission path, which increases the complexity of the system; thirdly, the three-level signal amplifier has a high requirement and the amplitude of its output signal must reach 2Vπ, which still has the problems of a large power consumption and various power supply.

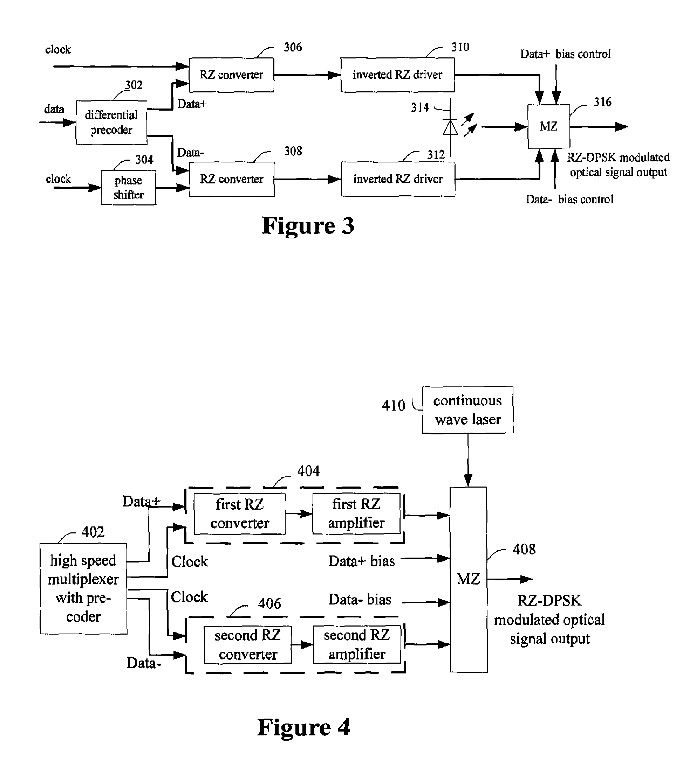

There is another apparatus for realizing the RZ-DPSK modulated an optical signal. As shown in figure 3, a high speed data stream is converted into differential data signals after they are coded by a high speed differential pre-coder 302, then these differential data signals go through a first RZ converter 306 and a second RZ converter 308 respectively and convert the NRZ signal into a RZ signal together with the clock signal modulated by a phase shifter 304. Then, the two-route RZ signals are inverted and amplified via a first phase-reversed RZ driver 310 and a second phase-reversed RZ driver 312 respectively to drive a LiNbO₃ modulator 316, and the LiNbO₃ modulator outputs the RZ-DPSK modulated optical signal at last. A continuous wave laser 314 has the same function as that of the continuous wave laser 108 in figure 1.

However, this apparatus uses more high-speed components, such as two RZ converters, two phase-reversed RZ drivers and a high-speed phase shifter, so that the debugging complexity of the optical module is increased. Moreover, this apparatus only considers the delay relationship between the clock and the data without paying attention to the delay relationship between the two-route signals which are converted into RZ signals, which causes hidden technical defects.

In a word, the apparatus for generating RZ-DPSK modulated optical signal in the prior art has problems in different extent, such as high price, large volume, high debugging complexity and high power consumption etc.

### Summary of the Invention

In view of the problems existed in the prior art, the object of the present invention is to provide a practical RZ-DPSK modulated optical signal generation apparatus and method that can reduce the costs, power consumption and the volume of the optical transmission system terminal.

In order to realize the above object, according to one aspect of the present invention, a RZ-DPSK modulated optical signal generation apparatus comprises: a high speed multiplexer for amplifying high speed data signal and de-multiplexing the same into parallel low speed signals, and pre-coding the parallel low speed signals, then multiplexing the pre-coded low speed signals into a high speed pre-coding data signal, inputting a processed data + and synchronous clock into a first RZ converter and amplifier, and inputting a processed data - and synchronous clock into a second RZ converter and amplifier; the first RZ converter and amplifier and the second RZ converter and amplifier for converting NRZ signal into RZ signal and amplify them respectively, then drive the differential input LiNbO₃ modulator, the CW laser emits continuous wave optical power and transmits through the modulator, in the end output RZ-DPSK modulated optical signal.

The RZ-DPSK modulated optical signal generation apparatus in the present invention further comprises: a phase shifter located on the data path on which the first RZ converter and amplifier locates, or located on the data path on which the second RZ converter and amplifier locates, used for ensuring the phase relationship between RZ signals.

A RZ-DPSK modulated optical signal generation apparatus in the present invention further comprises: a continuous wave laser for providing a stable output optical power for the LiNbO₃ modulator.

Wherein the continuous wave laser can be integrated into the LiNbO₃ modulator and it can be a broadband wavelength tunable laser.

According to another aspect of the present invention, a RZ-DPSK modulated optical signal generation method comprises the following steps: step S502, amplify a photo-electric converted high speed data signal and de-multiplex it into parallel low speed signals through a high speed multiplexer, pre-code the parallel low speed signals, then multiplex the pre-coded low speed signals into a high speed pre-coding data signal, input processed data+ and synchronous clock into a first RZ converter and amplifier, and input processed data - and synchronous clock into a second RZ converter and amplifier; step S504, the first and second RZ converter and amplifier converts NRZ signal into a RZ signal and amplifies the RZ signal respectively, the output amplified RZ signal is used to drive a differential input modulator; and step S506, the CW laser emits continuous wave optical power and transmits through the modulator, in the end output RZ-DPSK modulated optical signal..

In the present method, a phase shifter can be located on the first RZ converter and amplifier path or on the second RZ converter and amplifier path for ensuring the phase relationship between the two RZ signals. The continuous wave laser provides the LiNbO₃ modulator with a stable optical power input.

The apparatus and method proposed by the present invention can be used for generating the RZ-DPSK modulated optical signal of 10Gb/s or 40Gb/s.

It can decrease the volume of the optical transmission terminal effectively and reduce the costs greatly by adopting the apparatus and method of the present invention. In addition, the present invention uses the LiNbO₃ modulator with differential inputs, and output signal amplitude from the driver requests the peak-to-peak value to be Vπ, which can reduce the power consumption greatly and need no special power supply lead to less requirement for the power supply in the transmission terminal. In addition, the apparatus and method according to the present invention may need no high speed phase shifter, which can decreases the debugging complexity of the optical transmission terminal and is advantageous for realization of production.

### Brief Description of the Accompanying Drawings

The explained accompanying drawings herein are used for providing a further understanding of the present invention and are a part of the present application. The schematic embodiments of the present invention and the explanations thereto are used for explaining the present invention, and shall not be deemed as the limitation to the scope of the present invention. In the accompanying drawings:
Figure 1 is a block diagram illustrating the apparatus realizing RZ-DPSK modulated optical signal with two cascades LiNbO₃ modulators in the prior art;
Figure 2 is a block diagram illustrating the apparatus realizing RZ-DPSK modulated optical signal with a single stage of LiNbO₃ modulator in the prior art;
Figure 3 is a block diagram illustrating another apparatus realizing RZ-DPSK modulated optical signal by adopting a single stage of LiNbO₃ modulator in the prior art;
Figure 4 is a block diagram illustrating the RZ-DPSK modulated optical signal generation apparatus according to the embodiment of the present invention;
Figure 5 is a flow chart illustrating the RZ-DPSK modulated optical signal generation method according to the embodiment of the present invention; and
Figure 6 is a 10 Gb/s RZ-DPSK modulated optical eye diagram obtained based on the apparatus and method of the present invention.

### Embodiments for Carrying Out the Present Invention

A further detailed description of the RZ-DPSK modulated optical signal generation apparatus and method of the present invention will be described in detail as follows in conjunction with the accompanying drawings and embodiments.

Figure 4 is a block diagram illustrating the RZ-DPSK modulated optical signal generation apparatus according to the embodiment of the present invention. As shown in figure 4, the apparatus of the present invention realizes a RZ-DPSK modulated optical signal by adopting a single stage LiNbO₃ modulator. In the figure, a high speed multiplexer 402 with pre-coder amplifies a photo-electric converted high speed data signal and demultiplexes the high speed data into 16 bit low speed signals, then multiplexes the low speed signals to a high speed pre-coded data signal, the pre-corded signal is still a NRZ format. A high speed data + and a data - output from the multiplexer 402 together with a synchronous clock are input into a first RZ converter and amplifier 404 and a second RZ converter and amplifier 406 respectively to convert two-route NRZ signals into RZ signals, wherein the first RZ converter and amplifier 404 and the second RZ converter and amplifier 406 are identical components. The two-route data signals which are converted into RZ signals are amplified and used to drive a differential input modulator 408, 410 is just a stable CW laser source, which output power transmit through the LiNbO₃ modulator 408, a RZ-DPSK modulated optical signal is output at last.

If the consistency on the circuit design is considered adequately, the two-route signals which are converted into RZ signals need no phase shift; otherwise it is necessary to add a phase shifter into either the path to ensure the strict phase relationship between the two-route RZ signals. In addition, the two arms of the LiNbO₃ modulator 408 shall be biased previously to an appropriate bias voltage, and the continuous wave laser 410 aims to output a stable optical power to the LiNbO₃ modulator 408.

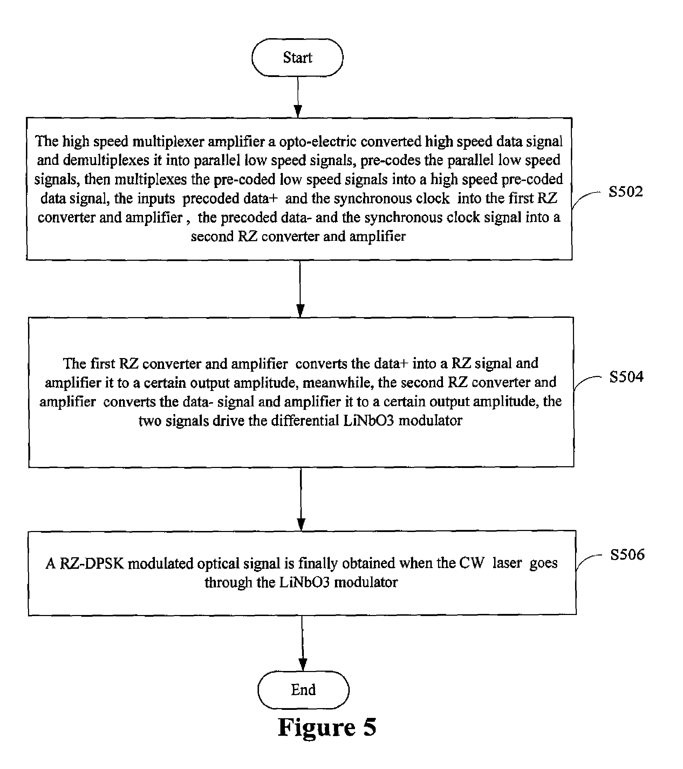

Figure 5 is a flow chart illustrating the RZ-DPSK modulated optical signal generation method according to the embodiment of the present invention. As shown in figure 5, the RZ-DPSK modulated optical signal generation method of the present invention comprises the following steps: step S502, amplify a photo-electric converted high speed data signal and de-multiplex the same into parallel low speed signals by a high speed multiplexer, pre-coded the parallel low speed signals, then multiplex the pre-coded low speed signals into a high speed pre-coded data signal, input pre-coded data + and a synchronous clock into a first RZ converter and amplifier, and input pre-coded data- and synchronous clock signal into a second RZ converter and amplifier; step S504, the first RZ converter and amplifier and second RZ converter and amplifier perform RZ conversion of the input NRZ signal and amplify the converted RZ signal, then the amplified RZ signal used to drive a LiNbO₃ modulator; and step S506, a continuous wave laser emits stable optical power and transmits through the LiNbO₃ modulator, a RZ-DPSK modulated optical signal output is obtained at last.

In the present method, a phase shifter can be located on the first RZ converter and amplifier path or on the second RZ converter and amplifier path for ensuring the phase relationship between the two RZ signals. The continuous wave laser provides the LiNbO₃ modulator with a stable optical power input.
The apparatus and method proposed by the present invention can be used to generate RZ-DPSK modulated optical signal in 10Gb/s or 40Gb/s DWDM transmission system.

A further description for carrying out the technical solution of the present invention will be indicated in detail as follows:

Firstly, as shown in figure 4, establish an experiment system and select appropriate high speed electronic devices, such as a high speed de-multiplex and multiplex with a pre-coder, a high speed RZ converter and amplifier that realizes the convertion of NRZ into RZ format in electronics domain, a continuous wave laser that can emit a stable optical power and a differential input LiNbO₃ modulator, high speed signal generator MP1763C from Anritsu is adopted as the signal source to produce high speed data and clock.

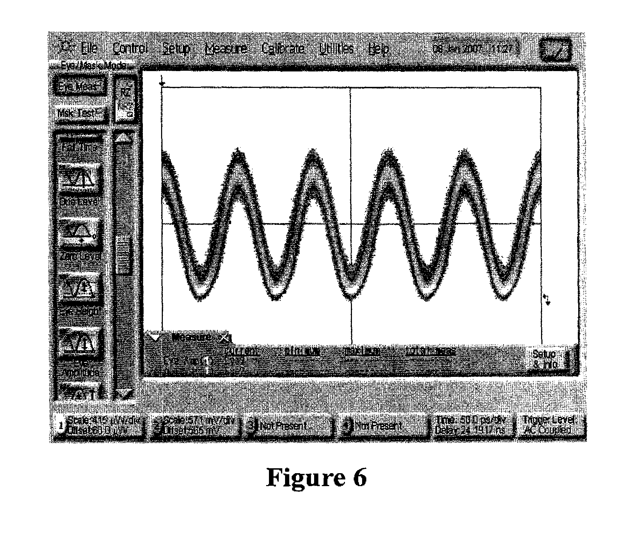

The eye diagram of the RZ-DPSK modulated optical signal of 10Gb/s is shown in figure 6, which is obtained by performing the following steps: emit high speed data of 9.953Gb/s and clock from the signal source to the high speed de-multiplex and multiplex with pre-coder, the multiplex component differentially outputs pre-coded data and synchronous clock into the RZ converter and amplifier, convert the NRZ signal into the RZ signal, regulate the output amplitude of the RZ signal properly to meet the requirement of the differential input LiNbO₃ modulator wherein a RZ driver outputs signals to drive the pre-biased LiNbO₃ modulator, and regulates the light source output power, we can get the optical eye diagram of RZ-DPSK modulated signal.

Although the present invention is mainly used for generating the RZ-DPSK modulated optical signal of 10Gb/s and is applied to DWDM (Density Wave Division Multiplexing) transmission system, other modulation optical signals, such as the RZ-DPSK modulated optical signal of 40Gb/s, still can be realized according to the technical method of the present invention with the mature components. Therefore, the generation of 40Gb/s RZ-DPSK modulated optical signal according to the technical method of the present invention falls in the protection scope of the appended claims of the present application.

It shall be explained that with the continuous development of the high speed electronic technology, the first and second RZ converter and amplifier in the above can be integrated into a single two-route NRZ to RZ converter and amplifier. In addition, with the development of the optoelectronic integration technology, the continuous wave laser and the LiNbO₃ modulator may be integrated into a single optoelectronic device to further decrease the volume of the whole apparatus and reduce the costs. Wherein, the continuous wave laser may be a broadband wavelength tunable laser. The above information also falls in the scope of protection of the appended claims of the present application.

Those who skilled in the field would easily know other advantages and variations of the present invention. Therefore, the aforesaid descriptions regarding the embodiments are specifically applied embodiments of the present invention, the wider aspects of the present invention are not limited to the specific details and the typical embodiments illustrated and described in the text. Therefore, various variations can be made without going beyond the sprite or scope of the present invention defined by claims and the equivalents thereof.

## Claims

1. A RZ-DPSK modulated optical signal generation apparatus comprises:
a high speed multiplexer for amplifying a photo-electric converted high speed data signal and de-multiplexing the same into parallel low speed signals, pre-coding the parallel low speed signals, then multiplexing the pre-coded low speed signals into a high speed data signal, and inputting a processed data + and synchronous clock into a first RZ converter and amplifier, and inputting a processed data - and synchronous clock into a second RZ converter and amplifier;
the first RZ converter and amplifier for converting the data + NRZ signal into a RZ signal and amplifying the converted RZ signal;
the second RZ converter and amplifier for converting the data - NRZ signal into a RZ signal, amplifying the converted RZ signal;
a continuous wave laser for providing the differential LiNbO₃ modulator with a stable optical power.
the differential input LiNbO₃ modulator driven by two-route RZ signals, with a continuous wave laser optical input, and outputting the RZ-DPSK modulated optical signal; and

2. The RZ-DPSK modulated optical signal generation apparatus according to claim 1, **characterized in that** it further comprises: a phase shifter locating at a data path on which the first RZ converter and amplifier locates, or locating at a data path on which the second RZ converter and amplifier locates, for ensuring the phase relationship between the two-route RZ signals.

3. The RZ-DPSK modulated optical signal generation apparatus according to claim 1, **characterized in that** the continuous wave laser can be a broadband wavelength tunable laser.

4. The RZ-DPSK modulated optical signal generation apparatus according to claim 3, **characterized in that** the continuous wave laser is integrated into the LiNbO₃ modulator with differential input.

5. The RZ-DPSK modulated optical signal generation apparatus according to anyone of claims 1 to 4, **characterized in that** the apparatus is used for generating the RZ-DPSK modulated optical signal of 10Gb/s or 40Gb/s.

6. A RZ-DPSK modulated optical signal generation method, comprises the following steps:
step S502, amplifying a photo-electric converted high speed data signal and demultiplexing the same into parallel low speed signals by a high speed multiplexer, pre-coding the parallel low speed signals, then multiplexing the pre-coded low speed signals into a high speed pre-coding data signal, and inputting a pre-coded data + and synchronous clock into a first RZ converter and amplifier, and inputting a pre-coded data - and synchronous clock signal into a second RZ converter and amplifier;
step S504, the first RZ converter and amplifier and second RZ converter and amplifier performing RZ conversion of the inputted NRZ signal respectively and amplifying the converted RZ signal, and drive a LiNbO₃ modulator; and
step S506, after a stable optical power emitted by a continuous wave laser transmit through the LiNbO₃ modulator with differential input, obtaining a RZ-DPSK modulated optical signal from the LiNbO₃ modulator output.

7. The RZ-DPSK modulated optical signal generation method according to claim 6, **characterized in that** a phase shifter is added on the data path on which the first RZ converter and amplifier locates or on the data path on which the second RZ converter and amplifier locates to ensure the phase relationship between the two-route RZ signals.

8. The RZ-DPSK modulated optical signal generation method according to claim 6, **characterized in that** a continuous wave laser provides the LiNbO₃ modulator with a stable optical power output.

9. The RZ-DPSK modulation optical signal generation method according to anyone of claims 6 to 8, **characterized in that** the method is used for generating the RZ-DPSK modulated optical signal of 10Gb/s or 40Gb/s.
